# EUROPEAN PATENT APPLICATION

(11) **EP 2 579 209 A1**
(43) Date of publication of application: **10.04.2013**
(21) Application number: 10852455.4
(22) Date of filing: 01.06.2010
(51) Int. Cl.: G06T 7/00

(54) **METHOD FOR RECOGNIZING OBJECTS**

(71) Applicant: Milenium Espacio Soft, S.A., 28023 Madrid (ES)
(72) Inventor: PICAZO MONTOYA, Carlos, E-28023 Madrid (ES)
(74) Representative: Elzaburu Marquez, Alberto
(86) International application number: PCT/ES2010/070369
(87) International publication number: WO 2011/151477

(57) **Abstract**

A recognition and placement procedure that identifies from a digital imaged captured with digital camera the position and orientation of a stored target object in a variety of positions, without digitally storing a wide variety of essential characters per pattern associated with the target object.

## Description

### Field of the Invention

The present invention refers, in general, to a procedure for automatic object recognition and placement in a warehouse module.

### BACKGROUND

In the state of the art the technique of using a recognition procedure for objects stored on a shelf in a warehouse is known, which comprises capturing digital images with a digital camera, said captured images being processed with an algorithm that carries out the task of recognizing the characters or essential features of objects stored on the warehouse shelves.

This procedure includes creating a set of patterns, a pattern for the object to be identified, that are stored in a storage memory or database. Each pattern contains the essential characters of an object targeted for recognition and placement.

The captured data image pattern is compared to each pattern corresponding to the set of objects targeted for recognition and placement on a shelving module.

In a situation in which the procedure finds some coincidence between the captured image and a pattern, the procedure generates an output signal indicating the recognized object or objects in the shelving module.

One drawback of the above recognition procedure is recognizing the position and orientation of a target object where the object can be one of a set of target objects.

The possibility of a variety of possible positions of the object targeted for recognition makes said recognition complicated. For example, an object can have a main or obverse face and a different secondary or reverse face, which makes creating the pattern of a target object difficult because there are limits to the capacity of data storage on computers.

Consequently, a pattern needs to avoid containing different orientations and scales of the associated object.

In general the use of a database containing a large volume of data is unviable and impractical.

### DESCRIPTION

The present invention seeks to resolve or reduce one or more of the drawbacks revealed above by means of a method for recognition and placement of objects in a storage module as defined in the claims.

In one embodiment the recognition and placement procedure identifies from a digital imaged captured with digital camera the position and orientation of a stored target object in a variety of positions, without digitally storing a wide variety of essential characters per pattern associated with the target object.

That is, the procedure recognizes and places a target object with a known position and orientation with respect to the camera by seeking a coincidence between the digital data matrix associated to the captured digital image and a pattern that comprises a reduced number of essential features or characters in a position and orientation.

It must be noted that the object can be rotated with respect to the stored pattern given that determining the orientation of the object is not a goal of the recognition procedure, but rather the recognition and placement of target objects in a module of shelves.

The search for coincidences in a reduced pattern can be done in less time and, consequently, the calculation time needed for comparing a data matrix with the patterns of the target objects is greatly reduced.

### MODES OF EMBODIMENTS

In one embodiment of the procedure a worker or operator at the point of sale captures digital images of the stored target objects in a module of storage shelves to recognize and locate them in the same.

The operator captures the images by means of an image capturing device, such as a digital camera, for example. The operator places himself in front of the module at issue and at a predetermined distance from the same that is, the image capturing is carried out from a frontal view of the shelving module without making use of a zoom and / or an additional internal or external light for the digital camera, that is, with the existing ambient lighting in the location of the shelving module.

The camera should be able to capture digital images at a resolution of around 5 mega-pixels, and, consequently, a digital image is a matrix of pixels.

In accordance with the physical dimensions of the module at issue, there is a possibility of having to capture several digital images consecutively so as to cover the whole module at issue.

Obviously, the sequence of digital images must be captured following a pre-set sequence so as to subsequently create a single image matrix from the digital information that is associated to all of the digital images corresponding to the module of shelves at issue.

Furthermore, the means for capturing the images comprises a general use processing module, such as a microprocessor, programmed to verify that the captured images meet a set of technical features or minimum qualify requirements such as predetermined focussing and brightness.

Once a set of images related to a module has been captured, the microprocessor executes a stored program to verity that each one of the captured images meet the minimum quality requirements. If the verification is positive, the microprocessor generates a first output message to indicate the suitability of the captured images. In the contrary situation, a second message is generated to indicate the suitability of capturing a second image corresponding to the shelving module or part thereof, in which the first image is not usable in the next steps of the automatic recognition and placement process.

Once the suitability of all of the images of the shelving module at issue have been verified by the microprocessor of the capturing module, all of the captured and stored digital images are transmitted from the capturing module by means of a first input / output module towards a first application module or application server through an air interface associated to a wireless telecommunications system, for example.

Once the captured images, pixel matrices related to the shelving module at issue, have been received through a second input / output module of the server, they are stored in a first storage module connected to the same.

The server is connected, in turn, to a computing unit which comprises a general use computer programmed to carry out the recognition analysis of the stored images.

The computer comprises a second central processing unit, a multimedia screen, a keyboard for entering the stored images into the first memory.

The second processor is programmed to carry out the recognition analysis of the captured images.

The first step that the second processor carries out is that of generating a single matrix of digital data which comprises elements of the matrix associated to the pixel images captured of the shelving module at issue. For this, the second processor executes a subroutine for identifying the technical features associated to existing points in common in each pixel matrix captured by the operator at the point of sale and associated to the module at issue.

It must be noted that in order to carry out the aforesaid step, the captured images must be captured in accordance with some set criteria for image capturing, in such a way that at least one point in common can be established between the images captured in sequence.

Said point in common can be, for example, an edge of a shelf corresponding to the shelving module, in such a way that if in one image said edge is on the right side of image, in the adjacent captured imaged the same edge will be visible on the left side of the following captured image.

The point in common can also be an object stored on a shelf in a known position and orientation with respect to the camera.

Consequently, the global pixel matrix generated from a set of image matrices comprising a set of objects in known positions and orientations with respect of the camera, from which the target objects within said shelving module must be recognized and placed by executing a pre-set recognition and placement command.

A second processor executes a recognition procedure which comprises a selection from a database of a subset of stored patterns associated to objects to be recognized and located in a shelving module, in such a way that a given stored pattern is compared to a subset of elements of the digital data matrix generated in the previous step of the procedure. The outcome of the comparison is to identify the existence of coincidences between a subset of elements of the matrix associated to a target object and a stored pattern associated to a target object.

Each pattern stored in the first memory comprises an set of differential or non-variable features obtained from the digital image of a target object. The stored pattern is generated starting from the image captured in a controlled setting.

As a consequence, the pixel matrices have been transformed into a data matrix that comprises essential features or characteristics in a position and orientation with respect to the camera of one of the target objects stored on the shelves.

Obviously, each stored pattern associated to an object comprises the essential features that can be searched for in the data matrix.

Therefore, once the second processor executes the recognition and placement order some coincidence can be detected between the set of elements of the global matrix associated to a target object and a stored pattern of the same object.

The second processor executes a recognition order in such a way that it reduces to a minimum the elements of the matrix that are subjected to the comparison with the stored patterns, that is, it carries out a conditioning process on the matrix generated from digital images captured in the store in order to be able to discard those zones within the storage module where the second processor determines that there are no products. As such, the second processor discards those zones in which there is a very high regularity and, as a consequence, said elements of the matrix are associated to a zone in which there is no possibility of a product being there, given that no changes are detected in the features or details, for example, a back panel of the module which has a completely white surface or a very dark area.

Once the areas where there are no targets are discarded, that is, elements of the global matrix are discarded in order to carry out the step of comparison and extraction of essential features which the second processor proceeds to do.

Thus, target objects are compared to the stored patterns. For this, the essential features of the patterns are extracted and compared to the elements of the matrix associated to the objects. When a coincidence is detected between a matrix element and a pattern, the element is associated to a zone of the module in which there could be a target; the second processor then conducts a search on the other essential features of the pattern around the element of the matrix where a coincidence has been detected.

The recognition order includes a semantic recognition subroutine associated to the labels of the target objects.

In the case that the second processor finds a minimum number of coincidences among the essential characteristics of the target object and the stored pattern, it generates a third output message that indicates the identified target object and its position in the shelving module.

A pattern can comprise a number of essential features in accordance with the type of object to which it is associated, that is, features that can differentiate said object from another distinct object, such as characteristic parameters of the physical shape and dimensions of the object, features associated to the label on the object, etc...

The generation of the third output message showing a coincidence is only generated if a given minimum number of coincidences are recognized between the essential features of a given pattern and a target object. In the event that the number of coincidences is less than the defined threshold of coincidences, it would mean that it is not possible to recognize a given object.

However, the second processor executes a subroutine of the recognition order so as to find coincidences between the essential features of an object adjacent to the first object and the stored pattern for the purpose of recognizing if the adjacent object comprises a number essential features that surpass the threshold of coincidences identified with the adjacent object and, furthermore, if there are essential features of the object among the identified coincidences that do not surpass the threshold of coincidences, the recognition order determines that both adjacent objects coincide with the same stored pattern. The second processor establishes that one of the analysed target objects is rotated with respect to the stored pattern and the adjacent object does not display any rotation with respect to the same pattern.

The described scenario can be found, for example, in a linear of a large surface in which on the same shelf there are several objects of the same product aligned and stored, where a customer has picked up one of them and immediately returned the object to its initial position, but rotated with respect to its initial position. However, the rest of the adjacent objects are still in their original position, which corresponds to the position and orientation that has the maximum number of coincidences with the pattern associated to said type of object.

It must be noted that the previous step can be repeated several times while several coincidences of essential features are identified between the analysed object and the stored pattern, given that a shelf in a supermarket holds several identical objects on the same shelf and adjacent shelves directly above and below.

Once all of the positions of the data matrix have been analysed by the recognition order executed by the second processor to recognize coincidences with the stored patterns associated to the target objectives, the second processor then generates a number of messages in accordance with the number of coincidences detected, it being possible to compile a report with the results obtained from said messages, in such a way that an image of the shelving module appears with the target objects and their position in the same identified together with the image of the shelving module with the desired objects placed in the desired positions.

It must be noted that when replacing objects in a linear, a re-stocker could refill a shelving module in an inappropriate manner, that is, distributing the objects on inadequate shelves.

For example, target objects for a young public, such as popcorn, should be placed on lower shelves in the shelving module, for example.

Therefore, based on said messages of coincidences, the order generates a diagram to show the placement of the target objects on each shelf of the analysed display case exactly as said objects should have been placed.

The diagram or planogram is a visual depiction of how a category of products is displayed in a linear, gondola or display case. Witch these planograms a subsequent analysis can be carried out of the main variables that occur at the point of sale, such as the stock present in each store, the percentage of space dedicated to the stock of each product, the number of faces per product, adjacent products, rules of utilized spaces, etc., and compared with a target planogram of how the goods should be placed.

Once the planograms have been generated, they should be entered into a database for posterior analysis and generation of reports that show on an individual or aggregate level the situation of the main variables that are produced at a given moment at the point of sale.

The procedure of recognition of the objects stored in a storage module at a point of sale of products can be carried out by a computer, loadable onto an internal memory of a computer with input and output units and, also, with processor units.

For this purpose the computer program comprises codes configured for executing the steps of the aforesaid process when it is executed by the computer. Furthermore, the executable codes can be saved by means of a readable carrier medium inside a computer.

## Claims

1. **A procedure** for recognizing objects stored in a storage module at the point of sale of products **characterized in that** the procedure comprises the steps of:
● acquisition of at least one digital image of the storage module at issue by means of a module for capturing images following a given capture sequence.
● verification of the images captured in a previous step by means of a first processing unit
● transmission of the verified digital images through a first input-output module of the module for capturing images towards a second input-output of a service application module via a telecommunications network
● storage of the digital images verified and received in the server, in a first storage module
● generation of a global digital data matrix beginning with the set of stored digital images by means of a second processing unit
● Comparison of the elements of the global matrix with features of the stored and associated patterns with objects that can be found in a point of sale, and
● Extraction of the coinciding features in order to generate an output message of recognition and placement of a target object in a storage module when a given minimum number of coinciding essential features are extracted.

2. **Procedure in** accordance with claim 1, **characterized in that** it further comprises a step for executing a recognition subroutine to find coincidences between essential features of an adjacent object and an object previously submitted to the recognition procedure in the case that the number of coincidences is lower than a given minimum number of coinciding essential features.

3. **Procedure in** accordance with claim 2, **characterized in that** it further comprises a step for generating an output message of recognition and placement of the object having a number of coincidences that is lower than a given minimum number of coinciding essential features, in the event that an output message of recognition and placement was generated for the subsequently analysed target objective, which is adjacent to the object in the storage module, based on whether the number of coinciding essential features is greater than the threshold of coincidences.

4. **Procedure** in accordance with claim 3, **characterized in that** it further comprises a generating step based on the output messages of a digital image from the storage module where the recognized target objects and their placement within said module are represented.

5. **A means readable by computer** that comprises codes readable by computer for giving instructions to a computer configured for executing a recognition procedure of objects stored in a storage module at a point of sale of products, **characterized in that** the procedure comprises the steps of:
**●** acquisition of at least one digital image of the storage module at issue by means of a module for capturing images following a given capture sequence.
● verification of the images captured in the previous step by means of a first processing unit
● transmission of the verified digital images through a first input-output module of the module for capturing images towards a second input-output of a service application module via a telecommunications network
● storage of the digital images verified and received in the server, in a first storage module
● generation of a global digital data matrix beginning with the set of stored digital images by means of a second processing unit
● Comparison of the elements of the global matrix with features of the stored and associated patterns with objects that can be found in a point of sale, and
● Extraction of the coinciding features in order to generate an output message of recognition and placement of a target object in a storage module when a given minimum number of coinciding essential features are extracted.

6. A computer program that can be loaded on a computer memory that comprises input and output units, memory units, processor units, where the computer program comprises executable codes configured to carry out the steps of the procedure of recognition of objects in accordance with claims 1 to 4 when they are executed by computer.
